# EUROPEAN PATENT APPLICATION

(11) **EP 3 670 975 A1**
(43) Date of publication of application: **24.06.2020**
(21) Application number: 18315051.5
(22) Date of filing: 17.12.2018
(51) Int. Cl.: F16J 15/30, F16J 15/40, F16J 15/44, F16J 15/447, F01D 11/02

(54) **RING-ELEMENT, SHAFT SEAL, METHOD TO PRODUCE**

(71) Applicant: Dresser-Rand SAS, 76600 Le Havre (FR)
(72) Inventor: MARINELLI, Giampiero, 76290 Montivilliers (FR); LEBIGRE, Olivier, 76133 Rolleville (FR)
(74) Representative: Eidelsberg, Olivier Nathan

(57) **Abstract**

The invention relates to a ring-element (SPR) of a shaft seal (SHS) extending circumferentially along a central axis (X),
- wherein said ring-element (SPR) is provided with conducts (RCD) to supply a seal fluid (SFL) from radially outside (ROS) to radially inside (RIS),
- wherein said ring-element (SPR) is provided with two axially opposing axial contact surfaces (ACS) extending on both axial front faces (AFF) in circumferential direction (CFD). To reduce axial space requirement, improve mechanical integrity and reduce pressure loss during the passage through said ring-element (SPR) said ring-element (SPR) comprises:
- a first axial annular wall (AW1) in turn comprising one said axial contact surface (ACS),
- a second axial annular wall (AW2) in turn comprising the other axial contact surface (ACS),

wherein said first and second axial walls (AW1, AW2) are connected to each other at inner wall surfaces (IWS), by means of axially extending connection structures (CST),
wherein said inner wall surfaces (IWS) are the respective opposite sides of said axial contact surfaces (ACS),
wherein said conducts (RCD) are defined by said connection structures (CST) and said inner wall surfaces (IWS).

## Description

The invention relates to a ring-element, preferably a spacer ring of a shaft seal extending circumferentially along a central axis, wherein said ring-element is provided with conducts to supply a seal fluid from radially outside to radially inside, wherein said ring-element is provided with two axially opposing axial contact surfaces extending on both axial front faces in circumferential direction. Further the invention relates to a shaft seal comprises a ring-element of such kind. Further the invention relates to a method to produce such ring-elements.

Terms like axial, radial, tangential, circumferential and the like respectively refer to said central axis if not indicated otherwise. The orientation of surfaces, planes and the like are characterized by the direction of their respective normal vector, being perpendicular to the respective surface or object.

Modern shaft seals - in particular for turbo machinery - are often designed as dry gas seals or floating ring seals respectively carbon ring seals (all these types of seals are referred to as carbon ring seals in the following) in order to obtain a minimum leakage through the gap between the stator and the rotor. Such carbon ring seals or dry gas seals operate without contact between stator seal components and rotor seal components under design operating conditions and still reach very low leakage rates. In addition, such shaft seals are suitable for sealing against pressure differences and are therefore most attractive to be implemented as shaft seals in turbo compressors. These extraordinary features are obtained by minimum gap dimensions between stator sealing components and rotor sealing components enabled by highest accuracy respectively minimum tolerances of machining of these components. In addition, these components need a sophisticated support during operation to avoid any deformation which would have influence on the geometry being critical for safe operation of the shaft seals. Such shaft seals require a supply of a seal fluid. The seal fluid supply needs to meet requirements regarding purification and the distribution of said seal fluid - preferably seal gas - needs to be uniform. Dirty seal fluid might destroy such a shaft seal by blocking small clearances between rotating and stationary components with particles. Such small clearances might also be changed by deformation caused by inadequate support or uneven seal fluid supply - for example by a seal fluid jet directed to only a few specific circumferential positions. Such uneven distribution might also lead to temperature differences causing thermal deformation. Known ring-elements of the incipiently defined type normally fulfill the double function of supporting stationary shaft seal parts of highest accuracy on the one hand and adequately providing a seal fluid supply to the shaft seal on the other hand. The seal fluid supply is provided from radially outside of the ring-element through the ring-element itself into the gap between the stator and the rotor. After entering a cavity between the stator and the rotor, the seal fluid normally enters at least one axially adjacent sealing gap between a rotating seal surface and a stationary seal surface. Many carbon ring seals rely on the accuracy of such ring-elements to guarantee a smooth operation of the carbon ring seals enabling radial displacement in order to minimize the radial gap between the rotor and the stator of the shaft seal components.

Conventional ring-elements of a shaft seal and a shaft seal with such a ring-element are known from US 2010/0253005 A1.

In order to minimize space requirements such ring-elements are designed to obtain a minimum axial space enhancing compactness of the seal cartridge and further reducing rotor length in order to optimize the overall performance of turbo machines with such shaft seals. Such compactness of ring-elements with injection function for the seal fluid is conventionally obtained by multiplying a number of injection holes and thereby minimizing the mechanical integrity of such a ring-element increasing the risk of distortion and also increasing the failure rate of such parts during machining.

In order to avoid such disadvantages the invention proposes a ring-element according to the incipiently defined design with the additional features of the characterizing portion of claim 1. Further the invention proposes a shaft seal according to the claims and a method to produce such a ring-element by additive manufacturing. The dependent claims respectively disclose preferred embodiments of the invention.

The invention proposes to provide a specific connection structure between axial end surfaces - preferably axial contact surfaces (end surfaces suitable or prepared to be in contact with adjacent components) - respectively walls of said ring-element to optimize the mechanical integrity of said ring-element on the one hand and to optimize the flow distribution of seal fluid downstream of said ring-element before (or 'upstream of') entering the respective sealing gaps. Due to the optimized stiffening connection structures of said ring-element the seal fluid flow through the ring-element's conducts improved such that a smaller pressure drop occurs before entering said sealing gaps.

Improved seal fluid (or seal gas) distribution improves additionally the aerodynamic performance of such a shaft seal and also contributes to a homogeneous temperature distribution in the shaft seal both enhancing operating behavior and operation ranges of such shaft seals with ring-elements according to the invention. One significant additional advantage is the improved compactness of the ring-element according to the invention. With less axial space the flow distribution is improved significantly. By reduction of the axial thickness compressor bearings span can be reduced increasing global performance of such turbo-machinery.

By applying radial conducts for the seal fluid which aren't of circular cross section shape as otherwise being obtained by conventional machining - the invention improves the aerodynamic properties with regard to the seal fluid flow through the ring-element. Said connection structures might comprise ribs, fins or pins in order to optimize mechanical integrity and the aerodynamic properties of the ring-element.

The mechanical integrity of the ring-element might be most beneficially improved by designing some pins extending with inclination to the axial direction. In particular, several pins may be designed such that the extension inclination to the central axis might be different from each other and therefore stiffening said ring-element against deformation caused by forces from diverse directions.

One preferred embodiment of the invention provides that some groups of said pins in conjunction with one of that inner wall surfaces are defining planes/edges of a shape of a polyhedron, in particular of a tetrahedron.

Another preferred embodiment of the invention provides that the ring-element is provided with an additional shaft seal structure facing radially inwards - in particular during operation facing a rotor surface respectively a rotor seal surface.

By usage of additive manufacturing it is possible to design and generate a ring-element according to the invention very efficiently. It is in particular possible to first generate a first axial wall and in a second step to generate said connection structure and finally generate said second axial wall wherein said connection structure maybe easily build by additive manufacturing without any compromise regarding the structure design or the machining time.

The above mentioned attributes and other features and advantages of this invention and the manner of attaining them will become more apparent and the invention itself will be better understood by reference to the following description of the currently best mode of carrying out the invention taken in conjunction with the accompanying drawings, wherein:
- Figure 1: shows a schematic longitudinal cross section through a part of a turbomachine - in particular a turbo-compressor - in the area of a carbon ring shaft seal incorporating a ring-element according to the invention,
- Figure 2: shows a schematic three-dimensional depiction of a part of a ring-element according to the invention being cut in a radial plane,
- Figure 3: shows a schematic depiction of a ring-element according to the invention being cut in an axial plane and illustrating the conduction of seal fluid flowing through the ring-element in a specific flow distribution,
- Figure 4: shows a schematic flow diagram illustrating a method to produce a ring-element according to the invention by additive manufacturing,
- Figure 5: shows a schematic three-dimensional depiction of another embodiment of the invention as a part of a ring-element according to the invention being cut in an axial-radially extending plane.
- Figure 6: shows the ring element of Fig. 5 additionally being cut in a radial-radially extending plane.

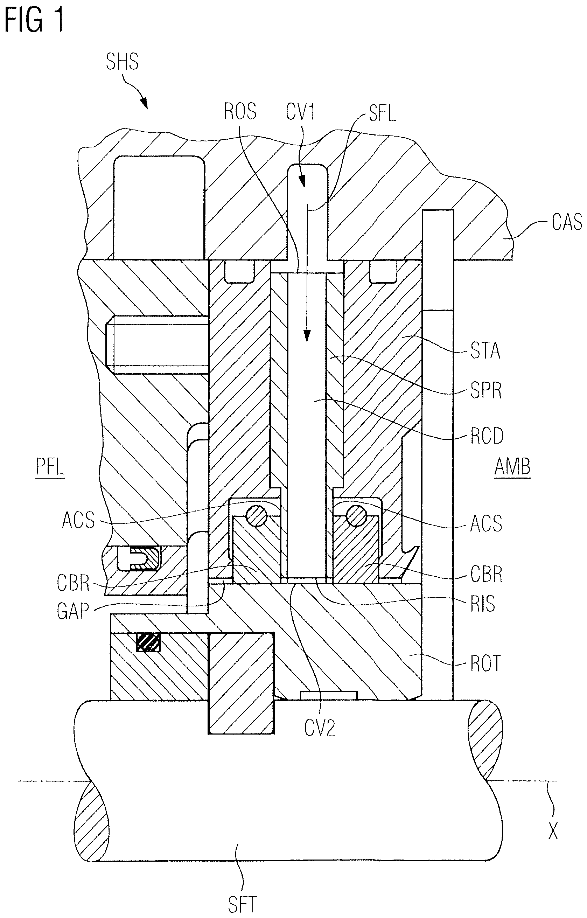

Figure 1 shows a schematic longitudinal cross section along an axis X of a detail of a turbomachine, here a compressor, in the area of a shaft seal SHS. In detail, figure 1 shows a shaft SFT extending along said axis X rotatably supported in bearings which are not shown in figure 1. Said shaft SFT carrying rotor ROT components of said shaft seal SHS. Said shaft seal SHS seals a pressure difference between a process fluid PFL being under pressure in a casing CAS being sealed off from the ambient AMB in the area of a circumferentially extending gap GAP between said rotor ROT of said shaft seal SHS and a stator STA of said shaft seal SHS. Said shaft seal SHS is inserted as a cartridge into said casing CAS with its stator STA parts. Rotor ROT parts of said shaft seal SHS fixed to the shaft SFT. Said shaft seal SHS shown in figure 1 is designed as a carbon ring seal comprising two carbon rings CBR being axially spaced from each other by a ring-element SPR - which is preferably made as a spacer ring - according to the invention. Said ring-element SPR extends circumferentially along said central axis X and is provided with conducts RCD to supply a seal fluid SFL from radially outside ROS to radially inside RIS. Said seal fluid SFL provided from a first cavity CV1 to said radial conduct RCD into a second cavity CV2 being positioned between said two carbon rings CBR. Said sealing fluid SFL enters respective radial gaps GAP between said carbon rings CBR and rotor ROT components of said shaft seal SHS. Said carbon rings CBR are in direct axial contact to said ring-element SPR touching each other at axial surfaces ACS - preferably made respectively prepared as axial contact surfaces - of said ring-element SPR.

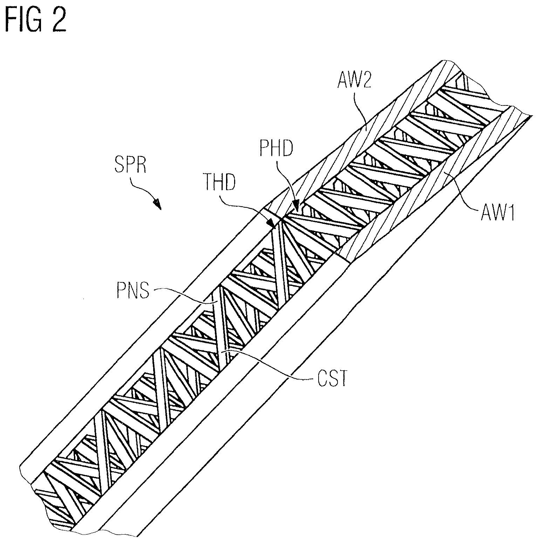

While said ring-element SPR depicted in figure 1 comprises a radial conduct RCD only schematically figure 2 shows three-dimensionally a schematic depiction of the ring-element SPR comprising a connection structure CST between a first axial wall AW1 and a second axial wall AW2 of said ring-element SPR. Said axial walls AW1, AW2 are respectively provided with an inner wall surface IWS which is directly joined to said connection structures CST keeping both axial walls AW1, AW2 in a specific distance from each other providing axial space and defining said radial conduct RCD to supply said seal fluid SFL from radially outside ROS to radially inside RIS. Further, said connection structure CST is stiffening said ring-element SPR against any deformation caused by forces from pressure differences and parts contacting said ring-element SPR with a certain pressure.

The connection structure CST shown in figure 2 comprises pins PNN which are at least partly extending with inclination to the axial direction. The pins PNS are extending with diverse inclination to the axial direction in order to provide the best stiffening effect to the structure.
Some groups of said pins PNS in conjunction with one of said inner surfaces IWS are defining edges/planes of a shape of a polyhedron in particular in at least some groups - preferably all groups - a tetrahedron.

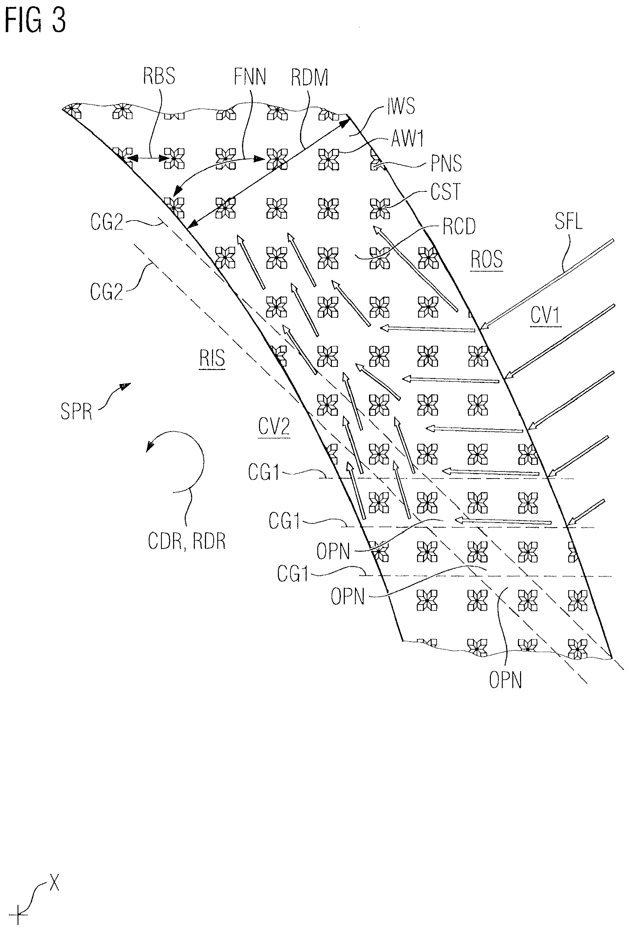

Figure 3 shows a cross section in an axial plane through the ring-element SPR schematically depicting the first axial wall AW1, said connection structure CST and the flow distribution of said sealing fluid SFL flowing from radial outside ROS to radial inside RIS to said first cavity CV1 to said second cavity CV2 to the radial conducts RCD. The main illustration shows the connection structure CST being designed with pins PNN as illustrated in figure 2 three dimensionally. The seal fluid also entering the ring-element SPR from radial outside ROS flows through the ring-element SPR through said radial conducts RCD along multiple flow path basically following radial pressure difference and the rotor rotation direction RDR. The connection structure CST the pins PNN enables the establishment of a very low pressure loss in the ring-element SPR. The ring-element has a radial width RDM of e.g. approximately 14mm.

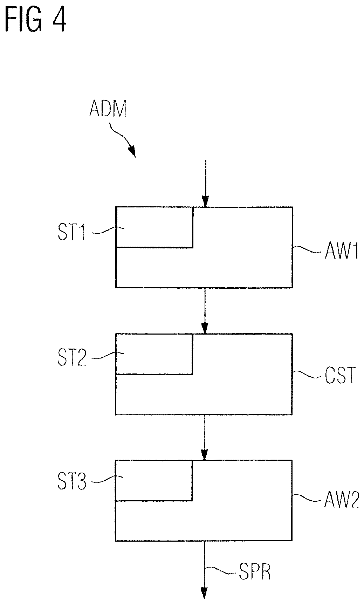

Figure 4 shows schematically a flow diagram illustrating the method to produce a ring-element SPR according to the invention. The ring-element SPR is preferably generated by additive manufacturing ADM. In a first step ST1 said first axial wall AW1 is generated. In s second step ST2 said connection structure CST is generated. In a third step ST3 said second axial wall AW2 is generated.

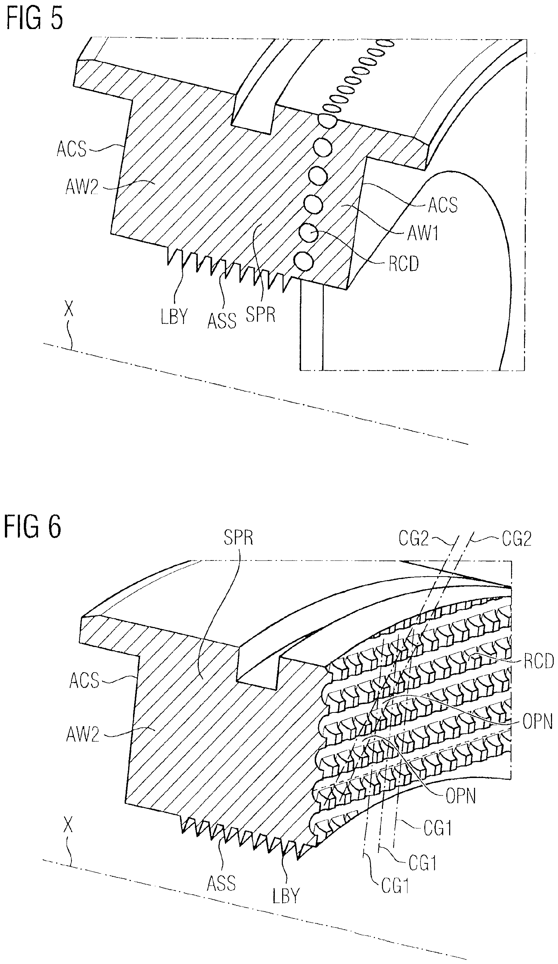

Figure 5 shows a schematic three-dimensional depiction of another embodiment of the invention as a part of a ring-element according to the invention being cut in an axial-radially extending plane. The ring-element SPR is provided with an additional shaft seal structure ASS facing radially inwards. This shaft seal structure ASS is made as a labyrinth seal LBY.

Figure 6 shows the ring element of Fig. 5 additionally being cut in a radial-radially extending plane in the area where the conducts RCD are located. In this perspective a lattice hole structure is visible, wherein the two groups of conducts RCD - a first group CG1 and a second group CG2 - are arranged differently in the ring-element's SPR volume, wherein between the first group's CG1 conducts RCD and the second group's CG2 conducts RCD are provided openings OPN to enable the fluid to flow from the first group's CG1 conducts RCD to the second group's CG2 conducts RCD or vice versa. Here, these openings OPN are crossings between flow-paths along said first group's CG1 conducts RCD and said second group's CG2 conducts RCD.

## Claims

1. Ring-element (SPR) of a shaft seal (SHS) extending circumferentially along a central axis (X),
- wherein said ring-element (SPR) is provided with conducts (RCD) to supply or drain a fluid - in particular a seal fluid (SFL) - from radially outside (ROS) to radially inside (RIS) or vice versa,
- wherein said ring-element (SPR) is provided with two axially opposing axial surfaces (ACS) extending on both axial front faces (AFF) in circumferential direction (CFD),
wherein said first and second axially opposing axial surfaces (ACS) are connected to each other by means of an axially extending connection structure (CST),
**characterized in, that**
said ring-element (SPR) comprises:
at least two groups of conducts (RCD) - a first group (CG1) and a second group (CG2) - arranged differently in the ring-element's (SPR) volume,
wherein between the first group's (CG1) conducts (RCD) and the second group's (CG2) conducts (RCD) are provided openings to enable the fluid to flow from the first group's (CG1) conducts (RCD) to the second group's (CG2) conducts (RCD) or vice versa.

2. Ring-element (SPR) according to claim 1, wherein said ring-element (SPR) comprises:
- a first axial annular wall (AW1) in turn comprising one said axial contact surface (ACS),
- a second axial annular wall (AW2) in turn comprising the other axial contact surface (ACS),
wherein said first and second axial walls (AW1, AW2) are connected to each other at inner wall surfaces (IWS), by means of said axially extending connection structures (CST),
wherein said inner wall surfaces (IWS) are the respective opposite sides of said axial contact surfaces (ACS),
wherein said conducts (RCD) are defined by said connection structures (CST) and said inner wall surfaces (IWS).

3. Ring-element (SPR) according to claim 1 or 2, wherein
said conducts (RCD) are not of circular cross section.

4. Ring-element (SPR) according to at least one of preceding claims 1, 2, 3,
wherein said connection structures (CST) comprise ribs (RBS).

5. Ring-element (SPR) according to at least one of the preceding claims 1, 2, 3, 4,
wherein said connection structures (CST) comprise pins (PNS).

6. Ring-element (SPR) according to claim 5,
wherein said pins (PNS) comprise pins (PNS) extending longitudinally with inclination to the axial direction.

7. Ring-element (SPR) according to claim 6,
wherein said pins (PNS) are extending with diverse inclination to the axial direction.

8. Ring-element (SPR) according to claim 7,
wherein some groups of said pins (PNS) are defining edges of a shape in conjunction with one of said inner surfaces (IWS) of a polyhedron.

9. Ring-element (SPR) according to at least one preceding claim 1 to 8,
wherein the ring-element (SPR) is provided with an additional shaft seal structure (ASS) facing radially inwards.

10. Ring-element (SPR) according to at least one preceding claim 1 to 9,
being made by additive manufacturing.

11. Shaft seal (SHS) comprising at least one ring-element (SPR) according to at least one of the preceding claims 1 to 10.

12. Method to produce a ring-element (SPR) according to at least one of the preceding claims 1 to 11 comprising the following steps:
- generating said first axial wall (AW1),
- generating said connection structure (CST),
- generating said second axial wall (AD2).
